# EUROPÄISCHE PATENTANMELDUNG

(11) **EP 4 011 830 A1**
(43) Veröffentlichungstag der Anmeldung: **15.06.2022**
(21) Anmeldenummer: 20213938.2
(22) Anmeldetag: 14.12.2020
(51) Int. Cl.: C01B 32/80

(54) **PHOSGENSYNTHESE DURCH UMSETZUNG EINES CHLOR UND KOHLENSTOFFMONOXID ENTHALTENDEN GASGEMISCHES AN ORGANISCHEM, CHLORANION-HALTIGEN KATALYSATOR**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Durch ein Verfahren zur Herstellung von Phosgen, umfassend mindestens die Schritte
a) Kontaktieren eines Gasgemisches, enthaltend Kohlenstoffmonoxid und Chlor, mit einem Katalysator, wobei der Katalysator mindestens eine ionische, Monochlor-Anion haltige organische Verbindung enthält, welche bei Kontakt mit Chlor eine ionische, Polychlor-Anion haltige, organische Verbindung bildet,
b) Umsetzung des Gasgemisches am Katalysator zu Phosgen,
lässt sich Phosgen unter Einsatz geringerer Aktivierungsenergie und in hohen Ausbeuten ohne Einsatz herkömmlicher Aktivkohlekatalysatoren herstellen.

## Beschreibung

Die Erfindung betrifft ein Verfahren zur Herstellung von Phosgen, sowie Zusammensetzungen, die in dem erfindungsgemäßen Verfahren und in dessen Ausführungsformen zum Einsatz kommen.

Üblicherweise wird Phosgen industriell durch die Umsetzung von Chlorgas und Kohlenstoffmonoxidgas bei erhöhten Temperaturen (an einem speziellen Aktivkohlekatalysator) hergestellt.

Die Umsetzung von Chlorgas und Kohlenstoffmonoxid verläuft gemäß folgender Gleichgewichtsreaktion:

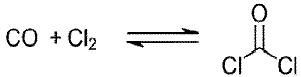

Mit zunehmender Temperatur verschiebt sich die Gleichgewichtsreaktion zu Gunsten der Edukte. Es war daher die Aufgabe der vorliegenden Erfindung ein Verfahren zur Bildung von Phosgen bei niedrigen Temperaturen bereitzustellen.

Für die Umsetzung von Chlorgas und Kohlenstoffmonoxid ist zwangsläufig die Verwendung eines zusätzlichen Aktivkohlekatalysators notwendig. Hierfür werden im Industriemaßstab klassischerweise aufwendig befüllte, speziell angefertigte, mit Aktivkohle bestückte Rohrreaktoren (Durchmesser: 40-80 mm) verwendet. Es war daher eine Aufgabe der vorliegenden Erfindung ein Verfahren zur Bildung von Phosgen für die direkte Weiterverarbeitung von Phosgen zu entwickeln, dass ohne einen solchen Aktivkohlekatalysator auskommt.

Will man kleinere Mengen Phosgen, i.e. weniger als 10 kg, nutzen, z.B. für chemische Reaktionen mit Phosgen als Edukt im Labormaßstab und dieses Phosgen direkt mittels Phosgensynthese im Labormaßstab herstellen, erweisen sich die herkömmlichen Synthesewege über eine Umsetzung von Chlorgas mit Kohlenstoffmonoxid am Aktivkohlekatalysator als zu aufwendig und daher nicht praktikabel. Es war daher eine Aufgabe der vorliegenden Erfindung ein Verfahren zur Bildung von Phosgen auch für die direkte Weiterverarbeitung in Mengen für den Labormaßstab bereitzustellen.

Die üblicherweise am Aktivkohlekatalysator durchgeführte Herstellung von Phosgen benötigt zur Initiierung der Reaktion die Zufuhr von Aktivierungsenergie. Es bestand die Aufgabe, ein Verfahren zur Phosgenherstellung bereitzustellen, welches eine reduzierte initiale Energiezufuhr benötigt und bei dem idealerweise bereits bei 20°C die Umsetzung von Cl₂ und Kohlenstoffmonoxid zu Phosgen startet.

Ferner war es die Aufgabe, die Effizienz der Gleichgewichtsreaktion für eine vermehrte Bildung des Produktes Phosgen zu steigern.

In der Patentanmeldung WO 2012/130803 A1 wurde beschrieben, dass sich spezielle ionische Flüssigkeiten als Chlorgasabsorber eignen, welche in einem Aufarbeitungsschritt eines Syntheseverfahrens in einer Rektifikationskolonne überschüssiges Chlor aus einem Rohprodukt einer Synthese abtrennen können. Das absorbierte Chlorgas soll durch Einleiten eines zusätzlichen Gases, z.B. Kohlenstoffmonoxid, ausgetrieben (gestrippt) werden, wobei die nach Austreibung des Chlorgases erhaltene Gasmischung, z.B. eine Mischung aus Cl₂ und Kohlenstoffmonoxid, einer klassischen Phosgensynthese zugeführt und dort umgesetzt werden soll.

Es wurde nun gefunden, dass die Umsetzung einer Gasmischung, enthaltend Kohlenstoffmonoxid und Chlor (Cl₂ ist nachfolgend als "Chlor" bezeichnet), mit mindestens einer Monochlor-Anion haltigen Verbindung Cl ist nachfolgend als Monochlor-Anion bezeichnet) gemäß nachfolgend beschriebenem Verfahren eine direkte Darstellungsmethode von Phosgen bietet, welche die zuvor erwähnten Aufgaben löst.

Ein Gegenstand der vorliegenden Erfindung ist daher ein Verfahren zur Herstellung von Phosgen, umfassend mindestens die Schritte
a) Kontaktieren eines Gasgemisches, enthaltend Kohlenstoffmonoxid und Chlor, mit einem Katalysator, wobei der Katalysator mindestens eine ionische, Monochlor-Anion haltige organische Verbindung enthält, welche bei Kontakt mit Chlor eine ionische, Polychlor-Anion haltige, organische Verbindung bildet,
b) Umsetzung des Gasgemisches am Katalysator zu Phosgen.

Ein "Reaktionsraum" ist ein Volumen, in dem die an einer chemischen Reaktion beteiligten Reaktionspartner zusammengebracht werden und in dem die chemische Reaktion stattfindet. Dies kann für eine chemische Reaktion beispielsweise das Volumen eines Gefäßes sein, in dem sich der besagte Katalysator und die Reaktionspartner, hier Kohlenstoffmonoxid und Chlor, gemeinsam befinden.

Eine "Reaktionszone" ist der Teil des Reaktionsraumes, in dem die chemische Reaktion abläuft.

Als "Katalysator" wird erfindungsgemäß ein Stoff verstanden, der die Reaktion von Kohlenstoffmonoxid und Chlor unter Bildung von Phosgen katalysiert.

Ein Stoff (bzw. eine Zusammensetzung) ist "flüssig", wenn er bei 20°C und 1013 mbar im flüssigen Aggregatzustand vorliegt. Ein Stoff (bzw. eine Zusammensetzung) ist "festförmig", wenn er bei 20°C und 1013 mbar im festen Aggregatzustand vorliegt. Ein Stoff (bzw. eine Zusammensetzung) ist "gasförmig", wenn er bei 20°C und 1013 mbar im als Gas vorliegt.

Ein Stoff ist "organisch", wenn seine chemische Struktur mindestens eine kovalente Kohlenstoff-Wasserstoff-Bindung enthält.

Unter Polychlor-Anion versteht der Fachmann das Anion [Clₙ]⁻ mit n größer 1.

Das erfindungsgemäße Verfahren wird derart durchgeführt, dass die ionische, Monochlor-Anion haltige organische Verbindung und das Gemisch enthaltende Kohlenstoffmonoxid und Chlorgas durch den Kontakt bereits zu einem Phosgen-haltigen Produkt umgesetzt werden. Die Reaktionsführung ist bevorzugt derart, dass besagter Katalysator in einem Reaktionsraum vorgelegt wird und besagtes Kohlenstoffmonoxid- und Chlorgas-haltige Gasgemisch derart in den Reaktionsraum eingebracht wird, dass am besagten Katalysator eine chemische Umsetzung des Chlorgases und des Kohlenstoffmonoxides im Reaktionsraum zu Phosgen stattfindet. Es wird dabei beobachtet, dass besagter Katalysator die Aktivierungsenergie der Reaktion von Kohlenstoffmonoxid und Chlor herabsetzt und dadurch die Reaktionsgeschwindigkeit erhöht, ohne bei der Reaktion verbraucht zu werden und ohne im Endprodukt zu erscheinen.

In dem erfindungsgemäßen Verfahren wird im Schritt a) ein Katalysator, enthaltend mit mindestens eine ionische, Monochlor-Anion haltige, organische Verbindung eingesetzt.

Bei der Durchführung des erfindungsgemäßen Verfahrens kann der Katalysator während des Kontaktes mit besagtem Gasgemisch in einer flüssigen Zusammensetzung gelöst, oder als Feststoff vorliegen. Gemäß einer bevorzugten Ausführungsform ist der Katalysator in einer flüssigen Zusammensetzung gelöst oder liegt bei 20°C und 1013 mbar als Feststoff vor. Besagter Katalysator kann selbst festförmig sein und/oder geträgert auf einem festförmigen Träger vorliegen. Liegt besagter Katalysator im Rahmen des erfindungsgemäßen Verfahrens auf einem festförmigen Träger geträgert vor, gilt dies im Sinne der Erfindung als Katalysator in Form eines Feststoffes. Als festförmiger Träger eignen sich die dem Fachmann der heterogenen Katalyse geläufigen Trägermaterialien wie beispielsweise Metalle, anorganisches Oxid (insbesondere ausgewählt aus Metalloxid (wie z.B. Titandioxid Aluminat), keramische Träger (wie z.B. Silikat (z.B. Schichtsilikat, Zeolith), Borat, Phosphat), organisches Polymer. Der Katalysator kann am Träger sorbiert, insbesondere absorbiert, adsorbiert oder kovalent an einem Träger (z.B. organisches Polymer, beispielsweise auf Basis Polyammonium-basierter Chlor-Anionen-Austauscherharze (e.g. Amberlite (Amberlite IRA-900)) durch Chemisorption gebunden sein.

Liegt besagter Katalysator im Rahmen des erfindungsgemäßen Verfahrens bei Kontakt mit besagtem Gasgemisch in Form eines Feststoffes vor, kann dieser in dem erfindungsgemäßen Verfahren in Form eines Festbettes oder in Form einer Suspension in einer flüssigen Zusammensetzung eingesetzt werden.

Vorzugsweise enthält der Katalysator mindestens eine ionische, Monochlor-Anion haltige, organische Verbindung, deren Kation ausgewählt wird aus der Gruppe einer oder mehrerer (bevorzugt jeweils unterschiedlich alkyl- und/oder aryl- substituierter) Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Anion Monochlorid (Cl⁻) ist. Unterschiedlich alkyl- und/oder aryl- substituierte Kationen, in denen das formal die kationische Ladung tragende Heteroatom asymmetisch alkyl- und/oder aryl-substituiert vorliegt, werden hierbei bevorzugt eingesetzt. Alkylsubstitution im Sinne der Erfindung ist insbesondere die Substitution mit C₁-bis C₆-Alkyl-bevorzugt C₁ bis C₃-Substituenden (Methyl-, Ethyl, n-Propyl- und Isopropyl-Substitution), Arylsubstitution ist insbesondere die Substitution mit C₅- bis C₆- Aryl-Substituenten. Die Aryl-Substituenten können gegebenenfalls verschiedene Heteroatome, wie zum Beispiel Sauerstoff, Schwefel, Stickstoff, Fluor oder Chlor enthalten.

Dabei ist wiederum besonders bevorzugte besagte mindestens eine ionische, Monochlor-Anion haltige organische Verbindung des Katalysators dadurch gekennzeichnet, dass sie als Kation mindestens ein Kation enthält, ausgewählt aus:
1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-5-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium,
Trimethylsulfonium, Triethylsulfonium, Diethylmethylsulfonium, Ethyldimethylsulfonium, Methyl(diphenyl)sulfonium, Ethyl(diphenyl)sulfonium triphenylsulfonium, Tris(4-tert-butylphenyl)sulfonium,
1-Butyl-1-methylpyrollidinium, 1-Propyl-1-methylpyrollidinium, 1-Propyl-1-ethylpyrollidinium, 1-Ethyl-1-methylpyrollidinium, 1-Diethylpyrollidinium, 1-Dimethylpyrollidinium,
1-Butyl-1-methylpiperidinium, 1-Propyl-1-methylpiperidinium, 1-Propyl-1-ethylpiperidinium, 1-Ethyl-1-methylpiperidinium, 1-Diethylpiperidinium, 1-Dimethylpiperidinium,
1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium, 1-Ethylpyridinium, 1-Hexyl-3 -methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-l-octylpyridinium, 1,1-Dimethylpyrrolidinium, 1-Butyl-1-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyl-lmethylpyrrolidinium,
Guanidinium, Hexamethylguanidinium, N,N,N',N'-Tetramethyl-N"-ethylguanidinium, N-Pentamethyl-N-isopropylguanidinium, N-Pentamethyl-N-propylguanidinium,
Benzyltriphenylphosphonium, Tetrabutylphosphonium, Trihexyl(tetradecyl)phosphonium, Tri-isobutyl(methyl)phosphonium,
Tetramethylammonium, Tetraethylammonium, Tetrapropylammonium, Tetrabutylammonium, Butyltrimethylammonium, Methyltrioctylammonium, Octyltrimethylammonium, Tetrabutylammonium, Tetrapropylammonium, Tetraethylammonium, Tetramethylammonium, Triethylmethylammonium, Ethyltrimethylammonium, Diethyldimethylammonium, Tripropylmethylammonium und/oder Tributylmethylammonium.

Als besonders geeignet stellte sich ein Verfahren heraus, in dem besagter Katalysator als ionische, Monochlor-Anion haltige organische Verbindung des Katalysators mindestens eine ionische organische Verbindung der allgemeinen Formel (I) und/oder (II), bevorzugt mindestens eine ionische Verbindung der allgemeinen Formel (I), enthält,

(I) [N-R1ₘR2ₙR3ₒ]⁺Cl⁻

(II) [P-R4ₚR5_{q}]⁺Cl⁻,

wobei in den Formeln (I) und (II) die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, iso-Propyl oder n-Propyl bedeuten,
wobei die Zeichen m, n, o, p und q unabhängig voneinander für eine ganze Zahl aus der Reihe von 0 bis 4 stehen, wobei die Summe von m+n+o und die Summe von p+q jeweils die Zahl 4 ergeben muss.

Weiter bevorzugt sind gemäß Formeln (I) und (II) einschränkend mindestens ein Rest R1, R2 oder R3 von den jeweils anderen Resten R1, R2 und R3 verschieden ist und die Reste R4 und R5 voneinander verschieden. Hierbei gelten, wenn diese Einschränkung gewählt wird, solche Verbindungen der Formeln (I) und/oder (II) als weiter bevorzugt geeignet, wenn gemäß allgemeiner Formel (I) die Zeichen m für 1, 2 oder 3, n für 1, 2 oder 3 und o für Null stehen, wobei m+n+o = 4 ist.

Im Rahmen einer weiteren Ausführungsform des erfindungsgemäßen Verfahren erwies es sich, beispielsweise für den Einsatz in einem Festbett, als besonders geeignet, dass als ionische, Monochlor-Anion haltige organische Verbindung des Katalysators mindestens eine ionische organische Verbindung ausgewählt aus NMe₄Cl, NEtMe₃Cl, NEt₂Me₂Cl, NEt₃MeCl, Et₄NCl, oder Mischungen daraus gewählt wird.

Bevorzugt einsetzbare, festförmige Katalysatoren enthalten mindestens eine, bei 20°C und 1013 mbar festförmige, ionische, Monochlor-Anion haltige, organische Verbindung, ausgewählt aus Me₄NCl, Et₄NCl, Me₃SCl oder Pr₄NCl. Diese Katalysatoren werden wiederum bevorzugt ungeträgert in dem erfindungsgemäßen Verfahren eingesetzt.

Bei Durchführung des erfindungsgemäßen Verfahrens bildet besagter Katalysator bei Kontakt mit Chlor aus dem besagten Gasgemisch zumindest intermediär eine ionische, Polychlor-Anion haltige, organische Verbindung. Diese setzt sich wiederum mit Kohlenstoffmonoxid des besagten Gasgemisches zu Phosgen unter Abbau des Polychlor-Anions, z.B. zu Monochlor-Anion, um. Daher enthält der Katalysator während der Durchführung des erfindungsgemäßen Verfahrens mindestens eine der besagten ionischen, Polychlor-Anion haltigen, organischen Verbindungen.

Im Rahmen einer weiteren Ausführungsform der Erfindung hat es sich vorteilhaft gezeigt, wenn sich das erfindungsgemäße Verfahren dadurch gekennzeichnet, dass der Katalysator durch den Kontakt von Chlor aus Schritt a) mindestens eine Polychlor-Anion haltige Verbindung bildet, deren Kation ausgewählt wird aus der Gruppe einer oder mehrerer jeweils unterschiedlich alkyl- und/oder aryl- substituierter Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Polychlor-Anion [Cl₍ᵣ₊₂₎]⁻ ist, worin r für eine ungerade ganze Zahl von 1 bis 7, bevorzugt für 1 oder 3, steht. Alkylsubstitution im Sinne der Erfindung ist insbesondere die Substitution mit C₁- bis C₆-Alkyl-bevorzugt C₁ bis C₃-Substituenden (Methyl-, Ethyl, n-Propyl- und Isopropyl-Substitution), Arylsubstitution ist insbesondere die Substitution mit C₅- bis C₆- Aryl-Substituenten. Die Aryl-Substituenten können gegebenenfalls verschiedene Heteroatome, wie zum Beispiel Sauerstoff, Schwefel, Stickstoff, Fluor oder Chlor enthalten.

Es ist erfindungsgemäß bevorzugt, wenn das Kation der besagten Monochlor-Anion-haltigen Verbindung ausgewählt wird aus der Gruppe einer oder mehrerer jeweils unterschiedlich alkyl- und/oder aryl- substituierter Kationen ausgewählt aus Ammonium-, Phosphonium-, Sulfonium-, Imidazolium-, Pyrrolidinium-, Piperidinium-, Pyridinium- oder Guanidiniumkationen oder Mischungen daraus und das Polychlor-Anion [Cl₍ᵣ₊₂₎]⁻ enthalten ist, worin r für eine ungerade ganze Zahl von 1 bis 7, bevorzugt für 1 oder 3, steht.

Besonders bevorzugt wird besagtes Kation aus der Gruppe der jeweils unterschiedlich alkyl- und/oder aryl-substituierten Ammoniumkationen oder Phosphoniumkationen ausgewählt.

Potenziell als Kation für besagte Polychlor-Anion haltige Verbindung des neuen Verfahrens geeignet sind die nachfolgend genannten, z.T. literaturbekannten einfachen Kationen, der Liste:
1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-5-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium,
Trimethylsulfonium, Triethylsulfonium, Diethylmethylsulfonium, Ethyldimethylsulfonium, Methyl(diphenyl)sulfonium, Ethyl(diphenyl)sulfonium triphenylsulfonium, Tris(4-tert-butylphenyl)sulfonium,
1-Butyl-1-methylpyrollidinium, 1-Propyl-1-methylpyrollidinium, 1-Propyl-1-ethylpyrollidinium, 1-Ethyl-1-methylpyrollidinium, 1-Diethylpyrollidinium, 1-Dimethylpyrollidinium,
1-Butyl-1-methylpiperidinium, 1-Propyl-1-methylpiperidinium, 1-Propyl-1-ethylpiperidinium, 1-Ethyl-1-methylpiperidinium, 1-Diethylpiperidinium, 1-Dimethylpiperidinium,
1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium, 1-Ethylpyridinium, 1-Hexyl-3 -methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-l-octylpyridinium, 1,1-Dimethylpyrrolidinium, 1-Butyl-1-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyl-lmethylpyrrolidinium,
Guanidinium, Hexamethylguanidinium, N,N,N' ,N'-Tetramethyl-N"-ethylguanidinium, N-Pentamethyl-N-isopropylguanidinium, N-Pentamethyl-N-propylguanidinium,
Benzyltriphenylphosphonium, Tetrabutylphosphonium, Trihexyl(tetradecyl)phosphonium, Tri-isobutyl(methyl)phosphonium,
Tetramethylammonium, Tetraethylammonium, Tetrapropylammonium, Tetrabutylammonium, Butyltrimethylammonium, Methyltrioctylammonium, Octyltrimethylammonium, Tetrabutylammonium, Tetrapropylammonium, Tetraethylammonium, Tetramethylammonium, Triethylmethylammonium, Ethyltrimethylammonium, Diethyldimethylammonium, Tripropylmethylammonium und/oder Tributylmethylammonium.

Im Rahmen einer Ausführungsform der Erfindung ist das erfindungsgemäße Verfahren dadurch gekennzeichnet, dass der Katalysator aus Schritt a) durch den Kontakt mit Chlor mindestens eine Polychlor-Anion haltige Verbindung der Formel (III) oder der Formel (IV) oder ein Gemisch daraus enthält,

[N-R¹ₘR²ₙR³ₒ]⁺[Cl₍ᵣ₊₂]⁻ (III)

[P-R⁴ₚR⁵_{q}]⁺[Cl₍ₛ₊₂₎]⁻ (IV)

in denen
die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
m, n, o, p und q unabhängig voneinander für eine ganze Zahl aus der Reihe von 0 bis 4 stehen, wobei die Summe von m+n+o und die Summe von p+q die Zahl 4 ergeben muss,
wobei r und s unabhängig voneinander für eine ungerade ganze Zahl von 1 bis 7, bevorzugt r und s unabhängig voneinander für 1 oder 3, stehen.

Hier zeigte sich ein erfindungsgemäßes Verfahren als besonders effektiv, bei dem gemäß Formeln (III) und (IV) einschränkend mindestens ein Rest R1, R2 oder R3 von den jeweils anderen Resten R1, R2 und R3 verschieden ist und die Reste R4 und R5 voneinander verschieden sind.

Bevorzugte Verbindungen der Formel (III) oder (IV) werden ausgewählt aus wenigstens einer Verbindung der Reihe: NMe₄Cl, NEt₄Cl, Pr₄NCl NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen, worin r für eine ungerade ganze Zahl von 1 bis 7, bevorzugt für 1 oder 3, steht. Hierbei sind wiederum diejenigen Verbindungen aus vorgenannter Reihe bevorzugt, die am Stickstoffatom des Kations asymmetrisch substituiert sind.

Besonders bevorzugte erfindungsgemäße Verfahren sind dadurch gekennzeichnet, dass die Verbindung der Formel (III) insbesondere ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NMe₄Cl, NEt₄NCl₍ᵣ₊₂₎ worin r für eine ungerade ganze Zahl von 1 bis 7, bevorzugt für 1 oder 3, steht.

In dem erfindungsgemäßen Verfahren können im Rahmen einer Ausführungsform im Schritt a) flüssige Komponenten (bei 1013 mbar und 20°C), enthaltend Katalysator mit mindestens einer besagten Monochlor-Anion haltigen Verbindung, eingesetzt werden.

Zur Bereitstellung dieser flüssigen, Katalysator-haltigen Komponente des Schritts a) ist, der Einsatz von flüssigen, organischen Lösungsmitteln als flüssige Zusammensetzung, in denen sich die besagte Monochlor-Anion haltige Verbindung einarbeiten lässt, unter Erhalt einer Lösung oder Dispersion, bevorzugt.

Ebenso können im Schritt a) des erfindungsgemäßen Verfahrens mindestens eine festförmige Monochlor-Anion-haltige Verbindung und zusätzlich eine damit in Kontakt stehende flüssige Zusammensetzung in Form einer flüssigen Phase (z.B. im Reaktionsraum) bereitgestellt werden. Unter einer "Phase" wird erfindungsgemäß ein Stoff oder ein Stoffgemisch verstanden, der mit einem anderen Stoff oder Stoffgemisch in Kontakt steht und eine Phasengrenze ausbildet. Eine Phasengrenze ist eine Bezeichnung für Flächen, die zwei nicht miteinander vermischte Phasen voneinander trennen; beispielsweise die trennenden Flächen zwischen den Phasen flüssig-fest, flüssig-flüssig, fest-fest, fest-gasförmig oder flüssig-gasförmig. Weitere Ausführungsformen entsprechender Schritte des erfindungsgemäßen Verfahrens, in denen organische Lösungsmittel enthaltende flüssige Zusammensetzungen als Lösungsmittel besagter Monochlor-Anion-haltigen Verbindung des Schritts a) oder als Dispersionsmittel für besagte Monochlor-Anion-haltige Verbindung des Schritts a) fungieren, sind später genauer beschrieben.

Im Schritt b) des erfindungsgemäßen Verfahrens wird am Katalysator das Gasgemisch aus Kohlenstoffmonoxid und Chlor unter Erhalt von Phosgen (bevorzugt im Reaktionsraum) umgesetzt.

Die Umsetzung von Chlor und Kohlenstoffmonoxid im Schritt b) läuft besonders effektiv ab, wenn als Katalysator des Schrittes a) bezogen auf die Stoffmenge des gebildeten Phosgens höchstens 20 Mol%, bevorzugt höchstens 10 Mol%, ganz besonders bevorzugt höchstens 5 Mol%, am bevorzugtesten höchstens 1 Mol%, besagter Verbindungen mit Monochlor-Anion eingesetzt werden. Ein eventueller Träger des Katalysators wird bei dieser Berechnung nicht berücksichtigt.

Für die Umsetzung des Kohlenstoffmonoxids unter Bildung von Phosgen gemäß Schritt b) des erfindungsgemäßen Verfahrens erwies es sich als besonders geeignet, wenn das Gasgemisch in Schritt a) ein Stoffmengenverhältnis von Kohlenstoffmonoxid und Chlor (i.e. Stoffmenge von Kohlenstoffmonoxid dividiert durch Stoffmenge Chlor) von mindestens 1, bevorzugt größer 1, besonders bevorzugt größer 1.25, ganz besonders bevorzugt größer 1.5, ist.

Üblicherweise werden für die Phosgenherstellung mittels klassischer Phosgensynthese zur Bereitstellung der notwendigen Energie Temperaturen von bis zu 500°C benötigt. Nachteilig ist hierbei die bei erhöhten Temperaturen bevorzugte Rückreaktion von Phosgen zu Chlor und Kohlenstoffmonoxid. Daher wird in einer bevorzugten Ausführungsform der Erfindung der Schritt b) bei Temperaturen < 500 °C, bevorzugt < 250 °C, weiter bevorzugt < 150°C, besonders bevorzugt bei < 100 °C, weiter bevorzugt < 80°C, ganz besonders bevorzugt < 50 °C, am bevorzugtesten < 30 °C, durchgeführt.

Die gemäß Schritt a) erfolgende Kontaktierung des Gasgemisches enthaltend Kohlenstoffmonoxid und Chlor mit besagtem Katalysator kann durch direktes Einleiten des besagten Gasgemisches in eine den besagten Katalysator enthaltenden flüssigen Phase, beispielsweise über eine Düse oder ein Rohr oder eine Fritte, erfolgen. Das gasförmige Kohlenstoffmonoxid kann ebenso als gasförmige Phase in den Reaktionsraum ohne Durchleitung durch besagte flüssige Phase eingebracht werden. Für den Fall, dass der besagte Katalysator festförmig ist und in Form eines Festbettes eingesetzt wird ist es bevorzugt, wenn besagtes Gasgemisch als Gasstrom vorliegt, der den Katalysator umströmt. Beispielsweise kann der festförmige Katalysator in einem Rohrreaktor oder in einem Wirbelbett eingesetzt werden.

Im Rahmen einer Ausführungsform der Erfindung kann Schritt a) derart durchgeführt werden, dass die für die Umsetzung vorgesehene Menge an Kohlenstoffmonoxid derart in einen Reaktionsraum geführt wird, dass dabei im Reaktionsraum eine Druckerhöhung bewirkt wird. Folglich sieht eine Ausführungsform des erfindungsgemäßen Verfahrens vor, dass vor Schritt a) besagtes Gasgemisch in einen Reaktionsraum eingebracht wird, so dass der Innendruck des Reaktionsraumes höher ist als der Atmosphärendruck, und das besagte Gasgemisch mit dem besagten Katalysator kontaktiert wird. Dabei ist es weiterhin vorteilhaft, die Kontaktdauer des besagten Gasgemisches mit dem besagten Katalysator entsprechend zu wählen, bis kein Druckabfall im Reaktionsraum mehr zu verzeichnen ist.

Eine weitere Ausführungsform des erfindungsgemäßen Verfahrens sieht vor, dass die für die Umsetzung vorgesehene Menge an besagtem Gasgemisch in einen Reaktionsraum eingebracht und mit dem besagten Katalysator kontaktiert wird, wobei die im Reaktionsraum befindliche Gasphase als Gasstrom im Kreislauf geführt und nach dem Ausbringen aus dem Reaktionsraum wiederholt in den Reaktionsraum eingeleitet wird.

Ebenso kann für eine Umsetzung ein Strom des besagten Gasgemisches in einen Reaktionsraum eingebracht und mit dem besagten Katalysator kontaktiert werden und Restgas aus dem Reaktionsraum ohne Rückführung in den Reaktionsraum abgeführt werden, wobei es bei dieser Durchströmung des Reaktionsraumes mit besagtem Gasgemisch bevorzugt ist, wenn das in Schritt b) gebildete Phosgen entweder im Reaktionsraum verbleibt oder aus dem Reaktionsraum herausgeführt und gesammelt wird.

Generell kann für das erfindungsgemäße Verfahren der Verbleib des im Schritt b) gebildeten Phosgens im Reaktionsraum oder die Herausführung des Phosgens aus dem Reaktionsraum vorgesehen sein.

Für den Fall, dass das Phosgen im Reaktionsraum verbleibt, ist eine Ausführungsform des erfindungsgemäßen Verfahrens dadurch gekennzeichnet, dass das in Schritt b) gebildete Phosgen in die Gasphase übergeht und während der Umsetzung des besagten Gasgemisches an besagtem Katalysator im Reaktionsraum verbleibt.

Eine weitere Ausführungsform des erfindungsgemäßen Verfahrens kann einen Übergang des Phosgens in die Gasphase vorsehen, wobei dann dieses in der Gasphase befindliche Phosgen aus dem Reaktionsraum herausgeführt und außerhalb des Reaktionsraumes gesammelt wird, beispielsweise durch Kondensation des Phosgens oder durch Lösung des Phosgens in einer flüssigen Zusammensetzung, enthaltend flüssiges Lösungsmittel. Zu diesem Zweck eignen sich prinzipiell alle organischen flüssigen Lösungsmittel, die bei 1013 mbar und 20°C nicht mit Phosgen reagieren, wie beispielsweise aliphatische Kohlenwasserstoffe, aromatische Kohlenwasserstoffe, insbesondere einem organischen Lösungsmittel, wie beispielsweise Toluol, 1,2-Dichlorbenzol, 1,4-Dichlorbenzol, Monochlorbenzol, Fluorbenzol, 1,2-Difluorbenzol, Dichlormethan oder Mischungen daraus. Ein bevorzugtes erfindungsgemäßes Verfahren ist somit dadurch gekennzeichnet, dass das in Schritt b) gebildete Phosgen aus dem Reaktionsraum herausgeführt wird und das darin enthaltene in Schritt b) gebildete Phosgen außerhalb des Reaktionsraumes gesammelt wird, bevorzugt durch Kondensation oder durch Lösung in organischem Lösungsmittel.

Es ist jedoch ebenso der Fall erfindungsgemäß, bei dem das Phosgen im Reaktionsraum verbleibt und dort in eine flüssige Zusammensetzung, enthaltend organisches Lösungsmittel, aufgenommen wird. Somit ist ein erfindungsgemäßes Verfahren bevorzugt, in dem das in Schritt b) gebildete Phosgen in einer flüssigen Zusammensetzung, enthaltend organisches Lösungsmittel, gelöst und dadurch gesammelt wird, wobei die besagte flüssige Zusammensetzung im Reaktionsraum ist. Dabei ist es vorteilhaft, wenn bereits während der Umsetzung in Schritt b) die besagte flüssige Zusammensetzung im Reaktionsraum ist und mit dem besagten Katalysator, enthaltend mindestens eine besagte Monochlor-Anion haltige Verbindung in Kontakt steht. Dabei kann die flüssige Zusammensetzung eine Phasengrenze zum Katalysator ausbilden oder der besagte Katalysator wird darin gelöst. Um eine Verdampfung des gebildeten Phosgens zu verringern und den Verbleib des Phosgens in der flüssigen Zusammensetzung zu erhöhen, kann besagte flüssige organische Zusammensetzung auf 0 bis 10°C gekühlt werden.

Das bei der Umsetzung im Schritt b) gebildete Phosgen kann direkt in die organisches Lösungsmittel enthaltende flüssige Zusammensetzung (optional in Form einer flüssigen Phase) übergehen und gesammelt werden. Eine Ausführungsform des erfindungsgemäßen Verfahrens gekennzeichnet sich folglich dadurch, dass in der flüssigen Zusammensetzung (insbesondere in der flüssigen Phase) mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.

Bevorzugt ist folglich ein erfindungsgemäßes Verfahren, worin in Schritt b) neben besagtem, mindestens eine Monochlor-Anion haltigen Verbindung enthaltenden Katalysator zusätzlich eine flüssige Phase, enthaltend organisches Lösungsmittel, vorliegt, wobei besagte flüssige Phase mit besagtem Katalysator in Kontakt steht. Die Auswahl des Lösungsmittels ist im Rahmen dieser Ausführungsform derart, dass sich die eingesetzte Menge an Monochlor-Anion haltiger Verbindung nicht vollständig in dem organischen Lösungsmittel löst. Hierzu erwies es sich als günstig, die besagte flüssige Phase derart auszuwählen, dass sich die Monochlor-Anion haltige Verbindung darin bei 20°C und 1013 mbar zu weniger als 0,1 g/L, insbesondere zu weniger als 0,01 g/L, löst.

Als geeignet haben sich insbesondere flüssige Zusammensetzungen herausgestellt, die organisches Lösungsmittel enthalten, das mit Polychlor-Anion haltigen Verbindungen, insbesondere bei den im erfindungsgemäßen Verfahren gewählten Reaktionsbedingungen (z.B. bezüglich Druck und Temperatur), keine chemische Reaktion eingeht, i.e. ein gegenüber Polychlor-Anion haltigen Verbindungen inertes Lösungsmittel darstellt. Es hat sich daher als bevorzugt erwiesen, wenn besagtes organisches Lösungsmittel aprotisch ist. Unter einem "aprotischen Lösungsmittel" versteht der Fachmann solche flüssigen, organischen Verbindungen, die als solche niedrige E_{T}^{N}-Werte (0,0-0,4; E_{T}^{N} = normalisierte Werte der empirischen Parameter der Lösemittelpolarität wie definiert in: Reichardt, C., Solvents and Solvent Effects in Organic Chemistry, 3. Aufl.; Wiley-VCH: Weinheim, (2003) aufweisen.

Besonders bevorzugte organische Lösungsmittel werden ausgewählt aus aprotischen, organischen Verbindungen mit mindestens einem Halogenatom, ausgewählt aus Chlor, Fluor, insbesondere 1,2-Dichlorbenzol, 1,4-Dichlorbenzol, Monochlorbenzol, Fluorbenzol, 1,2-Difluorbenzol, Dichlormethan oder Mischungen daraus, enthalten.

Das durch das erfindungsgemäße Verfahren in Schritt b) gebildete Phosgen kann im besagten Reaktionsraum mit mindestens einer Phosgen-reaktiven Komponente in Reaktion gebracht werden. Dabei ist es bevorzugt, wenn die Phosgen-reaktive Komponente eine organische Verbindung darstellt, bevorzugt mindestens ein organischer Alkohol oder mindestens ein organisches Amin, insbesondere mindestens eine organische Verbindung mit mindestens zwei Hydroxylgruppen oder mindestens eine organische Verbindung mit mindestens zwei Aminogruppen, besonders bevorzugt mindestens ein organisches Diol oder mindestens ein organisches Diamin.

Bei Durchführung des Schrittes b) des erfindungsgemäßen Verfahrens wird eine Zusammensetzung mit mehreren Phasen genutzt, die ebenfalls ein Gegenstand dieser Erfindung ist. Die in Schritt b) im Reaktionsraum vorliegende Zusammensetzung ist eine Zusammensetzung mit mindestens zwei Phasen, enthaltend als erste Phase ein Gasgemisch, enthaltend Kohlenstoffmonoxid und Chlor, sowie eine davon verschiedene katalysatorhaltige Phase, welche mindestens eine ionische, Monochlor-Anion haltige organische Verbindung enthält, die bei Kontakt mit Chlor eine ionische, Polychlor-Anion haltige, organische Verbindung bildet.

Mit zunehmender Reaktionsdauer ist ein Anstieg des Phosgengehaltes, insbesondere in der ersten Phase, zu verzeichnen, so dass eine erfindungsgemäß bevorzugte Zusammensetzung sich dadurch kennzeichnet, dass sie mindestens zwei Phasen umfasst, enthaltend als erste Phase ein Gasgemisch, enthaltend Kohlenstoffmonoxid, Chlor, Phosgen, sowie als eine davon verschiedene weitere Phase, welche einen Katalysator mit mindestens einer ionischen, Monochlor-Anion haltigen organischen Verbindung enthält, die bei Kontakt mit Chlor eine ionische, Polychlor-Anion haltige, organische Verbindung bildet.

Wird in Schritt b) des erfindungsgemäßen Verfahrens im Rahmen einer Ausführungsform mindestens ein organisches Lösungsmittel eingesetzt, so kann dieses mindestens eine organische Lösungsmittel Teil der vorgenannten weiteren Phase sein (z.B. Monochlor-Anion haltige Komponente löst sich in dem mindestens einen organischen Lösungsmittel) oder ist darin dispergiert. Bevorzugt geeignet ist eine Zusammensetzung mit mindestens zwei Phasen, enthaltend als erste Phase ein Gasgemisch, enthaltend Kohlenstoffmonoxid und Chlor, sowie als eine davon verschiedene Phase ein Katalysator mit mindestens einer ionischen, Monochlor-Anion haltigen organischen Verbindung, dadurch gekennzeichnet, dass die Zusammensetzung zusätzlich mindestens ein organisches Lösungsmittel enthält.

Insbesondere wird bei fortschreitender Reaktion im Schritt b) des erfindungsgemäßen Verfahrens eine Zusammensetzung erhalten, enthaltend Phosgen, mindestens eine ionische, organische, Monochlor-Anion haltige Verbindung und mindestens ein organisches Lösungsmittel. Dabei liegt bevorzugt das in der Zusammensetzung enthaltene Phosgen in dem mindestens einen organischen Lösungsmittel gelöst vor, wobei die mindestens eine ionische, organische, Monochlor-Anion haltige Verbindung zumindest teilweise in dem mindestens einen organischen Lösungsmittel gelöst ist. Es ist wiederum besonders bevorzugt, wenn das in der Zusammensetzung enthaltene Phosgen in dem mindestens einen organischen Lösungsmittel gelöst vorliegt und eine flüssige Phase bildet, wobei die mindestens eine ionische, organische, Monochlor-Anion haltige Verbindung zumindest teilweise als feste Phase vorliegt.

Ausführungsformen von Merkmalen des Verfahrens, die ebenso Merkmale der Zusammensetzung sind, sowie deren bevorzugten Ausgestaltungen, sind ebenfalls Ausführungsformen oder bevorzugte Ausgestaltungen der Zusammensetzung.

Ein weiterer Gegenstand der Erfindung ist die Verwendung mindestens einer ionischen, Monochlor-Anion haltigen organischen Verbindung, die bei Kontakt mit Chlor eine ionische, Polychlor-Anion haltige, organische Verbindung bildet, als Katalysator für die Umsetzung eines Gasgemisches, enthaltend Chlor und Kohlenstoffmonoxid, zu Phosgen.

Hierbei sind die im Rahmen des Verfahrens definierten Ausgestaltungen der Merkmale "ionische, Monochlor-Anion haltige organische Verbindung, die bei Kontakt mit Chlor eine ionische, Polychlor-Anion haltige, organische Verbindung des Verfahrens bildet" sowie "ionische, Polychlor-Anion haltige, organische Verbindung" ebenfalls Ausführungsformen oder bevorzugte Ausgestaltungen der Verwendung.

Im Rahmen von Ausführungsformen der Erfindung sind beispielsweise die nachfolgenden Aspekte 1 bis 24 zu nennen:
1. Verfahren zur Herstellung von Phosgen, umfassend mindestens die Schritte
   a) Kontaktieren eines Gasgemisches, enthaltend Kohlenstoffmonoxid und Chlor, mit einem Katalysator, wobei der Katalysator mindestens eine ionische, Monochlor-Anion haltige organische Verbindung enthält, welche bei Kontakt mit Chlor eine ionische, Polychlor-Anion haltige, organische Verbindung bildet,
   b) Umsetzung des Gasgemisches am Katalysator zu Phosgen.
2. Verfahren gemäß Aspekt 1, dadurch gekennzeichnet, dass der Katalysator mindestens eine ionische, Monochlor-Anion haltige, organische Verbindung enthält, deren Kation ausgewählt wird aus der Gruppe einer oder mehrerer (bevorzugt jeweils unterschiedlich alkyl- und/oder aryl- substituierter) Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Anion Monochlorid (Cl⁻) ist.
3. Verfahren nach einem der Aspekte 1 oder 2, dadurch gekennzeichnet, dass besagte ionische, Monochlor-Anion haltige organische Verbindung des Katalysators als Kation mindestens ein Kation enthält, ausgewählt aus:
   1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-5 methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethylimidazolium, 3,4-Dimethylimidazolium,
   Trimethylsulfonium, Triethylsulfonium, Diethylmethylsulfonium, Ethyldimethylsulfonium, Methyl(diphenyl) sulfonium, Ethyl(diphenyl) sulfonium triphenylsulfonium, Tris(4-tert-butylphenyl)sulfonium,
   1-Butyl-1-methylpyrollidinium, 1-Propyl-1-methylpyrollidinium, 1-Propyl-1-ethylpyrollidinium, 1-Ethyl-1-methylpyrollidinium, 1-Diethylpyrollidinium, 1-Dimethylpyrollidinium,
   1-Butyl-1-methylpiperidinium, 1-Propyl-1-methylpiperidinium, 1-Propyl-1-ethylpiperidinium, 1-Ethyl-1-methylpiperidinium, 1-Diethylpiperidinium, 1-Dimethylpiperidinium,
   1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium,1-Ethylpyridinium, 1-Hexyl-3-methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-1-octylpyridinium, 1,1-Dimethylpyrrolidinium, 1-Butyl-1-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyllmethylpyrrolidinium,
   Guanidinium, Hexamethylguanidinium, N,N,N',N'-Tetramethyl-N"-ethylguanidinium, N-Pentamethyl-N-isopropylguanidinium, N-Pentamethyl-N-propylguanidinium,
   Benzyltriphenylphosphonium, Tetrabutylphosphonium, Trihexyl(tetradecyl)phosphonium, Tri-isobutyl(methyl)phosphonium,
   Tetramethylammonium, Tetraethylammonium, Tetrapropylammonium, Tetrabutylammonium, Butyltrimethylammonium, Methyltrioctylammonium, Octyltrimethylammonium, Tetrabutylammonium, Tetrapropylammonium, Tetraethylammonium, Tetramethylammonium, Triethylmethylammonium, Ethyltrimethylammonium, Diethyldimethylammonium, Tripropylmethylammonium und/oder Tributylmethylammonium.
4. Verfahren nach einem der vorangehenden Aspekte, dadurch gekennzeichnet, dass als ionische, Monochlor-Anion haltige organische Verbindung des Katalysators mindestens eine ionische organische Verbindung der allgemeinen Formel (I) und/oder (II), bevorzugt mindestens eine ionische Verbindung der allgemeinen Formel (I), enthalten ist,

   (I) [N-R1ₘR2ₙR3ₒ]⁺Cl⁻

   (II) [P-R4ₚR5_{q}]⁺Cl⁻,

   wobei in den Formeln (I) und (II) die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, iso-Propyl oder n-Propyl bedeuten,
   wobei die Zeichen m, n, o, p und q unabhängig voneinander für eine ganze Zahl aus der Reihe von 0 bis 4 stehen, wobei die Summe von m+n+o und die Summe von p+q jeweils die Zahl 4 ergeben muss.
5. Verfahren nach Aspekt 4, dadurch gekennzeichnet, dass gemäß Formeln (I) und (II) einschränkend mindestens ein Rest R1, R2 oder R3 von den jeweils anderen Resten R1, R2 und R3 verschieden ist und die Reste R4 und R5 voneinander verschieden sind.
6. Verfahren nach Aspekt 5, dadurch gekennzeichnet, dass gemäß allgemeiner Formel (I) die Zeichen m für 1, 2 oder 3, n für 1, 2 oder 3 und o für Null stehen, wobei m+n+o = 4 ist.
7. Verfahren nach einem der vorangehenden Aspekte, dadurch gekennzeichnet, dass als ionische, Monochlor-Anion haltige organische Verbindung des Katalysators mindestens eine ionische organische Verbindung ausgewählt aus NMe₄Cl, NEtMe₃Cl, NEt₂Me₂Cl, NEt₃MeCl, Et₄NCl, oder Mischungen daraus enthalten ist.
8. Verfahren nach einem der vorangehenden Aspekte, dadurch gekennzeichnet, dass der Katalysator durch den Kontakt von Chlor aus Schritt a) mindestens eine Polychlor-Anion haltige Verbindung bildet, deren Kation ausgewählt wird aus der Gruppe einer oder mehrerer jeweils unterschiedlich alkyl- und/oder aryl- substituierter Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Polychlorid-Anion Cl₍ᵣ₊₂₎⁻ ist, worin r für eine ungerade ganze Zahl von 1 bis 7, bevorzugt für 1 oder 3, steht.
9. Verfahren nach einem der vorangehenden Aspekte, dadurch gekennzeichnet, dass der Katalysator aus Schritt a) durch den Kontakt mit Chlor mindestens eine Polychlor-Anion haltige Verbindung der Formel (III) oder der Formel (IV) oder ein Gemisch daraus enthält,

   [N-R¹ₘR²ₙR³ₒ]⁺[Cl₍ᵣ₊₂₎]⁻ (III)

   [P-R⁴ₚR⁵_{q}]⁺[Cl₍ₛ₊₂₎]⁻ (IV)

   in denen
   die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
   m, n, o, p und q unabhängig voneinander für eine ganze Zahl aus der Reihe von 0 bis 4 stehen, wobei die Summe von m+n+o und die Summe von p+q die Zahl 4 ergeben muss,
   wobei r und s unabhängig voneinander für eine ungerade ganze Zahl von 1 bis 7, bevorzugt r und s unabhängig voneinander für 1 oder 3, stehen.
10. Verfahren nach Aspekt 9, dadurch gekennzeichnet, dass gemäß Formeln (III) und (IV) einschränkend mindestens ein Rest R1, R2 oder R3 von den jeweils anderen Resten R1, R2 und R3 verschieden ist und die Reste R4 und R5 voneinander verschieden sind.
11. Verfahren gemäß Aspekt 9, dadurch gekennzeichnet, dass die Verbindung der Formel (III) oder (IV) ausgewählt ist aus wenigstens einer Verbindung der Reihe: NMe₄Cl, NEt₄Cl, Pr₄NCl NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen, worin r die in Anspruch 8 definierte Bedeutung hat.
12. Verfahren gemäß Aspekt 9, dadurch gekennzeichnet, dass die Verbindung der Formel (III) insbesondere ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NMe₄Cl, NEt₄NCl₍ᵣ₊₂₎ worin r die in Anspruch 8 definierte Bedeutung hat.
13. Verfahren gemäß einem der vorangehenden Aspekte, dadurch gekennzeichnet, dass der Katalysator in einer flüssigen Zusammensetzung gelöst ist oder bei 20°C und 1013 mbar als Feststoff vorliegt, insbesondere in Form eines Festbetts oder in Form einer Suspension in einer flüssigen Zusammensetzung.
14. Verfahren gemäß einem der vorangehenden Aspekte, wobei als Katalysator des Schrittes a) bezogen auf die Stoffmenge des gebildeten Phosgens höchstens 20 Mol%, bevorzugt höchstens 10 Mol%, ganz besonders bevorzugt höchstens 5 Mol%, am bevorzugtesten höchstens 1 Mol%, besagter Verbindungen mit Monochlor-Anion eingesetzt werden.
15. Verfahren gemäß einem der vorangehenden Aspekte, dadurch gekennzeichnet, dass in Schritt a) das Stoffmengenverhältnis von Kohlenstoffmonoxid und Chlor mindestens 1, bevorzugt größer 1, besonders bevorzugt größer 1.25, ganz besonders bevorzugt größer 1.5, ist.
16. Verfahren gemäß einem der vorangehenden Aspekte, dadurch gekennzeichnet, dass die Schritte a) und b) bei Temperaturen < 100 °C, bevorzugt < 50 °C, besonders bevorzugt < 30 °C, durchgeführt werden.
17. Verfahren gemäß einem der vorangehenden Aspekte, dadurch gekennzeichnet, dass das in Schritt b) gebildete Phosgen in die Gasphase übergeht.
18. Verfahren gemäß einem der vorangehenden Aspekte, dadurch gekennzeichnet, dass das in Schritt b) gebildete Phosgen gesammelt wird, bevorzugt durch Kondensation oder durch Lösung in einer flüssigen Zusammensetzung, enthaltend organisches Lösungsmittel.
19. Verfahren gemäß einem der vorangehenden Aspekte, dadurch gekennzeichnet, dass das in Schritt b) gebildete Phosgen in einer flüssigen Zusammensetzung, enthaltend organisches Lösungsmittel, gelöst und dadurch gesammelt wird, wobei die besagte flüssige Zusammensetzung mit dem Katalysator aus Schritt a) in Kontakt steht.
20. Verfahren gemäß einem der Aspekte 18 oder 19, dadurch gekennzeichnet, dass in der flüssigen Zusammensetzung mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.
21. Verfahren gemäß einem der vorangehenden Aspekte, dadurch gekennzeichnet, dass das Phosgen aus Schritt b) in einem Schritt c) mit mindestens einer Phosgen-reaktiven Komponente in Reaktion gebracht wird.
22. Zusammensetzung mit mindestens zwei Phasen, enthaltend als erste Phase ein Gasgemisch, enthaltend Kohlenstoffmonoxid und Chlor, sowie eine davon verschiedene katalysatorhaltige Phase, welche mindestens eine ionische, Monochlor-Anion haltige organische Verbindung enthält, die bei Kontakt mit Chlor eine ionische, Polychlor-Anion haltige, organische Verbindung bildet.
23. Zusammensetzung gemäß Aspekt 22, enthaltend Phosgen.
24. Verwendung mindestens einer ionischen, Monochlor-Anion haltigen organischen Verbindung, die bei Kontakt mit Chlor eine ionische, Polychlor-Anion haltige, organische Verbindung bildet, als Katalysator für die Umsetzung eines Gasgemisches, enthaltend Chlor und Kohlenstoffmonoxid, zu Phosgen.

### Beispiele

Folgende Beispiele werden angeführt, um exemplarisch die Durchführung der erfindungsgemäßen Lehre zu illustrieren, ohne deren Gegenstand darauf zu beschränken:

### Beispiel 1: Diskontinuierliches Verfahren im Reaktor mit Zugabe von o-Dichlorbenzol

[NEt₃Me]Cl (53 mg, 0,351 mmol, 3,5 mol%) wurde in einem Reaktor vorgelegt, zwecks Befreiung von Restfeuchtigkeit getrocknet. Anschließend wurde 20 mL *o*-Dichlorbenzol zugesetzt und die resultierende Suspension entgast. Der Reaktor wurde mit einem Gemisch aus Chlor (700 mg, 10,009 mmol, 1 Äq.) und Kohlenstoffmonoxid (∼ 16 mmol, 1,6 Äq.) befüllt und die Reaktionsmischung wurde durchmischt, wobei die Bildung von Phosgen mittels IR-Spektroskopie eindeutig nachgewiesen wurde (v = 3632(vw) cm⁻¹, 1826(s) cm⁻¹, 1626(w) cm⁻¹, 1409(vw) cm⁻¹, 1107(w) cm⁻¹, 851(vs) cm⁻¹ und 571(w) cm⁻¹). Es wurde ein quantitativer Umsatz des Chlors zu Phosgen erzielt.

### Beispiel 2: Diskontinuierliches Verfahren im Rohrreaktor

Ein Rohrreaktor wurde mit festem, feinkörnigem [NEt₄]Cl (230 mg, 1,393 mmol) befüllt. Der Rohrreaktor wurde mit einer Peristaltikpumpe sowie einem IR Spektrometer zu einem Kreislauf verbunden. Das System wurde mit einem Gemisch aus Kohlenstoffmonoxid (20.20 mmol) und Chlorgas (3.5 mmol) befüllt. Die Gasphase wurde kontinuierlich durch das System gepumpt und die Gasphase per IR Spektroskopie charakterisiert. In den IR-Spektren wurde direkt die Bildung von Phosgen beobachtet ersichtlich durch die stetige Abnahme der charakteristischen Absorptionsbande des Kohlenstoffmonoxides bei 2171 cm⁻¹ sowie die Zunahme der für Phosgen charakteristischen Absorptionsbande bei 1682 cm⁻¹.

## Patentansprüche

1. Verfahren zur Herstellung von Phosgen, umfassend mindestens die Schritte
a) Kontaktieren eines Gasgemisches, enthaltend Kohlenstoffmonoxid und Chlor, mit einem Katalysator, wobei der Katalysator mindestens eine ionische, Monochlor-Anion haltige organische Verbindung enthält, welche bei Kontakt mit Chlor eine ionische, Polychlor-Anion haltige, organische Verbindung bildet,
b) Umsetzung des Gasgemisches am Katalysator zu Phosgen.

2. Verfahren gemäß Anspruch 1, **dadurch gekennzeichnet, dass** der Katalysator mindestens eine ionische, Monochlor-Anion haltige, organische Verbindung enthält, deren Kation ausgewählt wird aus der Gruppe einer oder mehrerer (bevorzugt jeweils unterschiedlich alkyl- und/oder aryl- substituierter) Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Anion Monochlorid (Cl⁻) ist.

3. Verfahren nach einem der vorangehenden Ansprüche, **dadurch gekennzeichnet, dass** als ionische, Monochlor-Anion haltige organische Verbindung des Katalysators mindestens eine ionische organische Verbindung der allgemeinen Formel (I) und/oder (II), bevorzugt mindestens eine ionische Verbindung der allgemeinen Formel (I), enthalten ist,
(I) [N-R1ₘR2ₙR3ₒ]⁺ Cl⁻
(II) [P-R4ₚR5_{q}]⁺Cl⁻,
wobei in den Formeln (I) und (II) die Reste R1, R2, R3, R4 und R5 unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, iso-Propyl oder n-Propyl bedeuten,
wobei die Zeichen m, n, o, p und q unabhängig voneinander für eine ganze Zahl aus der Reihe von 0 bis 4 stehen, wobei die Summe von m+n+o und die Summe von p+q jeweils die Zahl 4 ergeben muss.

4. Verfahren nach Anspruch 3, **dadurch gekennzeichnet, dass** gemäß Formeln (I) und (II) einschränkend mindestens ein Rest R1, R2 oder R3 von den jeweils anderen Resten R1, R2 und R3 verschieden ist und die Reste R4 und R5 voneinander verschieden sind.

5. Verfahren nach Anspruch 4, **dadurch gekennzeichnet, dass** gemäß allgemeiner Formel (I) die Zeichen m für 1, 2 oder 3, n für 1, 2 oder 3 und o für Null stehen, wobei m+n+o = 4 ist.

6. Verfahren nach einem der vorangehenden Ansprüche, **dadurch gekennzeichnet, dass** als ionische, Monochlor-Anion haltige organische Verbindung des Katalysators mindestens eine ionische organische Verbindung ausgewählt aus NMe₄Cl, NEtMe₃Cl, NEt₂Me₂Cl, NEt₃MeCl, Et₄NCl, oder Mischungen daraus enthalten ist.

7. Verfahren nach einem der vorangehenden Ansprüche, **dadurch gekennzeichnet, dass** der Katalysator durch den Kontakt von Chlor aus Schritt a) mindestens eine Polychlor-Anion haltige Verbindung bildet, deren Kation ausgewählt wird aus der Gruppe einer oder mehrerer jeweils unterschiedlich alkyl- und/oder aryl- substituierter Kationen ausgewählt aus Ammonium-, Phosphonium-, Sulfonium, Pyrrolidinium-, Piperidinium-, Imidazolium-, Pyridinium- oder Guanidiniumkationen oder Mischungen daraus (bevorzugt aus der Gruppe der jeweils unterschiedlich alkyl- und/oder aryl-substituierten Ammoniumkationen oder Phosphoniumkationen) und deren Polychlorid-Anion Cl₍ᵣ₊₂₎⁻ ist, worin r für eine ungerade ganze Zahl von 1 bis 7, bevorzugt für 1 oder 3, steht.

8. Verfahren nach einem der vorangehenden Ansprüche, **dadurch gekennzeichnet, dass** der Katalysator aus Schritt a) durch den Kontakt mit Chlor mindestens eine Polychlor-Anion haltige Verbindung der Formel (III) oder der Formel (IV) oder ein Gemisch daraus enthält,
[N-R¹ₘR²ₙR³ₒ]⁺[Cl₍ᵣ₊₂₎]⁻ (III)
[P-R⁴ₚR⁵_{q}]⁺ [Cl₍ₛ₊₂₎]⁻ (IV)
in denen
die Reste R¹, R², R³, R⁴ und R⁵ unabhängig voneinander gleich oder verschieden einen Alkylrest ausgewählt aus der Gruppe: Methyl, Ethyl, n-Propyl, iso-Propyl, n-Butyl, iso-Butyl und 2-Methylpropyl, bevorzugt Methyl, Ethyl, oder n-Propyl, bedeuten,
m, n, o, p und q unabhängig voneinander für eine ganze Zahl aus der Reihe von 0 bis 4 stehen, wobei die Summe von m+n+o und die Summe von p+q die Zahl 4 ergeben muss,
wobei r und s unabhängig voneinander für eine ungerade ganze Zahl von 1 bis 7, bevorzugt r und s unabhängig voneinander für 1 oder 3, stehen.

9. Verfahren nach Anspruch 8, **dadurch gekennzeichnet, dass** gemäß Formeln (III) und (IV) einschränkend mindestens ein Rest R1, R2 oder R3 von den jeweils anderen Resten R1, R2 und R3 verschieden ist und die Reste R4 und R5 voneinander verschieden sind.

10. Verfahren gemäß Anspruch 8, **dadurch gekennzeichnet, dass** die Verbindung der Formel (III) oder (IV) ausgewählt ist aus wenigstens einer Verbindung der Reihe: NMe₄Cl, NEt₄Cl, Pr₄NCl NEtMe₃Cl₍ᵣ₊₂₎, NEt₂Me₂Cl₍ᵣ₊₂₎, NEt₃MeCl₍ᵣ₊₂₎, NBuEt₂MeCl₍ᵣ₊₂₎, NMePr₃Cl₍ᵣ₊₂₎, NBu₂Me₂Cl₍ᵣ₊₂₎, PEt₃MeCl₍ᵣ₊₂₎, wobei die Kürzel Me, Et, Pr, Bu für Methyl, Ethyl, n-Propyl und n-Butyl stehen, worin r die in Anspruch 8 definierte Bedeutung hat.

11. Verfahren gemäß Anspruch 8, **dadurch gekennzeichnet, dass** die Verbindung der Formel (III) insbesondere ausgewählt ist aus wenigstens einer Verbindung der Reihe: NEtMe₃Cl₍ᵣ₊₂₎, NEt₂Me₂Cl₍ᵣ₊₂₎, NEt₃MeCl₍ᵣ₊₂₎, NMe₄Cl, NEt₄NCl₍ᵣ₊₂₎ worin r die in Anspruch 8 definierte Bedeutung hat.

12. Verfahren gemäß einem der vorangehenden Ansprüche, **dadurch gekennzeichnet, dass** in Schritt a) das Stoffmengenverhältnis von Kohlenstoffmonoxid und Chlor mindestens 1, bevorzugt größer 1, besonders bevorzugt größer 1.25, ganz besonders bevorzugt größer 1.5, ist.

13. Verfahren gemäß einem der vorangehenden Ansprüche, **dadurch gekennzeichnet, dass** die Schritte a) und b) bei Temperaturen < 100 °C, bevorzugt < 50 °C, besonders bevorzugt < 30 °C, durchgeführt werden.

14. Verfahren gemäß einem der vorangehenden Ansprüche, **dadurch gekennzeichnet, dass** das in Schritt b) gebildete Phosgen gesammelt wird, bevorzugt durch Kondensation oder durch Lösung in einer flüssigen Zusammensetzung, enthaltend organisches Lösungsmittel.

15. Verfahren gemäß einem der vorangehenden Ansprüche, **dadurch gekennzeichnet, dass** das in Schritt b) gebildete Phosgen in einer flüssigen Zusammensetzung, enthaltend organisches Lösungsmittel, gelöst und dadurch gesammelt wird, wobei die besagte flüssige Zusammensetzung mit dem Katalysator aus Schritt a) in Kontakt steht.

16. Verfahren gemäß einem der Ansprüche 14 oder 15, **dadurch gekennzeichnet, dass** in der flüssigen Zusammensetzung mindestens ein organisches Lösungsmittel enthalten ist, in dem sich Phosgen bei 20°C und 1013 mbar zu mindestens 1 g/L löst, bevorzugt zu mindestens 100 g/L löst, besonders bevorzugt zu mindestens 250 g/L löst.

17. Verfahren gemäß einem der vorangehenden Ansprüche, **dadurch gekennzeichnet, dass** das Phosgen aus Schritt b) in einem Schritt c) mit mindestens einer Phosgen-reaktiven Komponente in Reaktion gebracht wird.

18. Zusammensetzung mit mindestens zwei Phasen, enthaltend als erste Phase ein Gasgemisch, enthaltend Kohlenstoffmonoxid und Chlor, sowie eine davon verschiedene katalysatorhaltige Phase, welche mindestens eine ionische, Monochlor-Anion haltige organische Verbindung enthält, die bei Kontakt mit Chlor eine ionische, Polychlor-Anion haltige, organische Verbindung bildet und bevorzugt Phosgen.

19. Verwendung mindestens einer ionischen, Monochlor-Anion haltigen organischen Verbindung, die bei Kontakt mit Chlor eine ionische, Polychlor-Anion haltige, organische Verbindung bildet, als Katalysator für die Umsetzung eines Gasgemisches, enthaltend Chlor und Kohlenstoffmonoxid, zu Phosgen.
